# EUROPÄISCHE PATENTSCHRIFT

(11) **EP 0 899 496 B1**
(45) Veröffentlichungstag und Bekanntmachung des Hinweises auf die Patenterteilung: **14.05.2003**
(21) Anmeldenummer: 98112240.1
(22) Anmeldetag: 02.07.1998
(51) Int. Cl.: F16L 23/028

(54) **Schlaucharmatur mit Anzugsbegrenzung**
Hose fitting with tightening limit stop
Raccorderie de tuyau souple avec butée de limitation de serrage

(30) Priorität: 30.08.1997 DE 29715632 U
(43) Veröffentlichungstag der Anmeldung: 03.03.1999
(73) Patentinhaber: Schulz, H., Dipl.-Ing. HDS Hydraulik GmbH & CO. KG., 51647 Gummersbach (DE)
(72) Erfinder: Schulz, Rüdiger, 48161 Münster-Nienberge (DE)
(74) Vertreter: Patentanwälte Dr. Solf & Zapf

(56) Entgegenhaltungen:
- FR-A- 1 077 197
- US-A- 2 880 020
- US-A- 3 301 576
- US-A- 5 518 275

## Beschreibung

Die vorliegende Erfindung betrifft eine Schlaucharmatur, die als SAE-Kopfarmatur für Höchstdruckschläuche ausgebildet ist, bestehend aus einem Rohrstutzen mit einendigem Anschlußkopf, der als SAE-Kopf ausgebildet ist, wobei der Rohrstutzen sich einstückig an dem Anschlußkopf anschließt, sowie einem auf diesem gelagerten einteiligen Vollflansch, wobei der Anschlußkopf kegelstumpfförmig ausgebildet ist und die kleinere Kegelstunpfendfläche den Übergang zum Rohrstutzen bildet und der Vollflansch eine Durchgangsöffnung besitzt, die ein dem kegelstumpfförmigen Abschnitt des Anschlußkopfes entsprechendes kegelstumpfförmiges Negativprofil aufweist.

Bei den bekannten SAE-Flansch-Kopf-Armaturen erfolgt die Befestigung des Vollflansches in der Regel mittels vier Schrauben. Bei einer nicht fachgerechten Montage ohne entsprechenden Drehmomentschlüssel, können die Schrauben zu fest angezogen werden, so daß der Vollflansch zu weit in Richtung der größeren Kegelstumpfendfläche gezogen wird und durch den Anschlußkopf unzulässig aufgeweitet wird.

Aus der US 3,301,576 ist eine Verbindung für Rohrleitungen bekannt. Diese Rohrleitungsverbindung erfolgt über einen Anschlußkopf, der eine konische Aussenfläche aufweist, die in Richtung eines Rohrstutzens an einer ersten Schulter endet. Hierbei besitzt ein Vollflansch ein Negativprofil und eine zweite Schulter. Durch eine weitere Schulter wird eine Planlage des Vollflansches erreicht. Die erste Schulter ist im Bereich des kleinere Durchmessers angeordnet. Durch die erste Schulter des Anschlusskopfes wird erreicht, dass eine Dichtungsfunktion präzise eingestellt und eine zu starke Beanspruchung der Teile einer Armatur vermieden wird. Diese Druckschrift beschreibt weiterhin einen Zentrieransatz, der in eine Aufnahme des Anschlusskopfes greift. Der Zentrieransatz sorgt für eine genaue Zentrierung von Dichtungsflächen. Diese Dichtungsflächen stoßen nicht stumpf zusammen, sondern radial. Die Verbindung der konischen Außenfläche bewirkt ein Zusammendrücken (in radialer Richtung) der Dichtungsflächen. Am Kopfende ist ein zweiter Anschlag vorhanden, der die Relativbewegung der Dichtungsflächen in axialer Richtung begrenzt und ein extremes Aneinanderstoßen der Dichtungsflächen verhindert. Anschlagsflächen dieses zweiten Anschlags sind schrägwinkelig angeordnet. Dieser Anschlusskopf ist nicht als Kegelstumpf ausgebildet, sondern weist lediglich eine konische Außenfläche auf und ist im Dichtungsbereich mit einem dünneren Querschnitt versehen. Diese Armatur beruht auf dem Prinzip, dass radiale Kräfte wirken. Diese Armatur ist konstruktiv aufwändig und ausserdem für SAE-Kopfarmaturen nicht geeignet.

Die US 5,518,275 beschreibt eine Rohrleitungsverbindung, die einen Rastbund als Anschlagbegrenzung aufweist. Sie beschreibt weiterhin einen Metallring, der um eine Leitung angeordnet und nicht einstückig ausgebildet ist. Der Metallring ist konisch mit einem Rastbund im Bereich der größeren Fläche ausgebildet. Dieser stützt sich an einem Rastbund eines nicht kegelstumpfförmigen Anschlusskopfes ab. Diese Verbindung weist ausserdem einen O-Dichtring auf. Als SAE-Armatur für Höchstdruckschläuche ist diese Rohrverbindung auch nicht geeignet.

Der Erfindung liegt die Aufgabe zugrunde, die oben genannten Nachteile zu vermeiden und die bekannte Höchstdruck-SAE-Flansch-Kopf-Armatur derart zu verbessern, daß bei einer nicht fachgerechten Montage der Vollflansch nicht aufgeweitet wird und dadurch die Funktion des Vollflansches im Zusammenhang mit dem Anschlußkopf bestehen bleibt.

Erfindungsgemäß wird dies dadurch erreicht, daß der Anschlußkopf im Bereich der größeren Kegelstumpfendfläche eine Anzugsbegrenzung für den Vollflansch aufweist, und sich die Anzugsbegrenzung unmittelbar an die größere Kegelstumpfendfläche anschließt, wobei die Anzugsbegrenzung derart ausgebildet und angeordnet ist, dass die Stirnfläche durch eine Durchmesservergrößerung des Anschlußkopfs vergrößert wird und die Anzugsbegrenzung aus einem Ringbund besteht und wobei in der Stirnfläche eine Ringnut für einen O-Dichtring angeordnet ist.

Die Erfindung basiert darauf, daß eine zu weite Bewegung des Vollflansches in Richtung der größeren Kegelstumpfendfläche vermieden wird und dabei die verbindende Funktion des Vollflansches bestehen bleibt, da die Kraftübertragung zwischen dem Vollflansch und dem Anschlußkopf hauptsächlich über eine, eine schiefe Ebene bildende, Kegelumfangsfläche erfolgt. Lediglich die überschüssige auf den Vollflansch wirkende Kraft wird von der erfindungsgemäßen Begrenzung aufgefangen. Durch die Anzugsbegrenzung wird ferner auch bei unterschiedlichen Anzugs-Drehmomenten der Schrauben eine absolute Planlage des Vollflansches erreicht. Dies ist eine wichtige Vorraussetzung für eine sichere Funktion der Schraubenköpfe, die ohne Planlage dazu neigen abzureißen. Außerdem bewirkt diese eine völlig spaltfreie Auflage der Armaturen-Dichtfläche auf dem jeweiligen Gegenanschluß mit zuverlässiger Abdichtung und ohne Verletzungsgefahr für die jeweiligen Dichtringe. Wegen einer Durchmesservergrößerung des Anschlußkopfes durch die Anzugsbegrenzung wird die Stirnfläche vergrößert, was zu einer erhöhten Standfestigkeit auf dem Gegenanschluß führt. Ferner wird durch die verstärkte Auflage des äußeren Flanschbundes der Armatur sichergestellt, daß auch bei erhöhten Anzugs-Drehmomenten der Schrauben die Gefahr einer Überschreitung der Materialfließgrenze und damit verbundene Deformationen des Dichtkopfes mit der Folge von möglichen Undichtigkeiten vermieden wird.

Vorteilhafte Ausführungen der Erfindung sind in den Unteransprüchen enthalten.

Anhand der in den beiliegenden Zeichnungen dargestellten Ausführungsbeispiele wird die Erfindung näher erläutert.

Es zeigen:
- Fig. 1: einen Teillängsschnitt durch eine erfindungsgemäße Schlaucharmatur,
- Fig. 2: einen Teillängsschnitt durch eine andere erfindungsgemäße Schlaucharmatur.

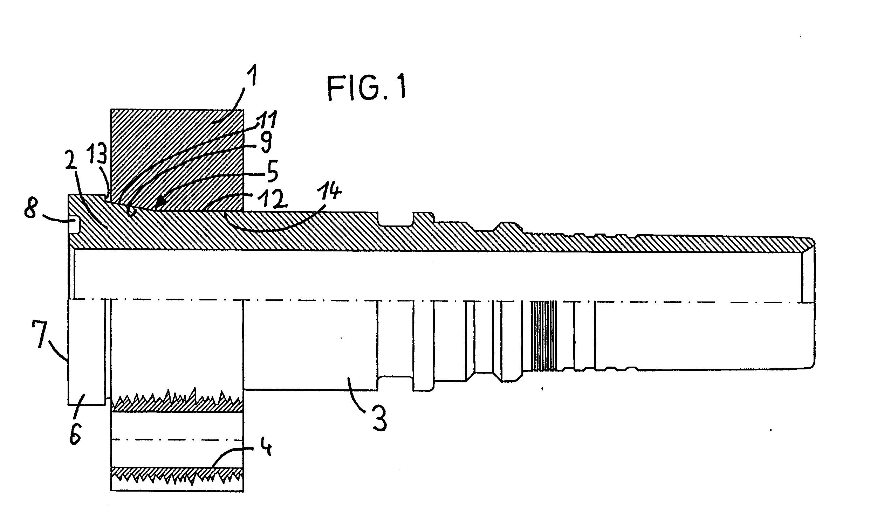

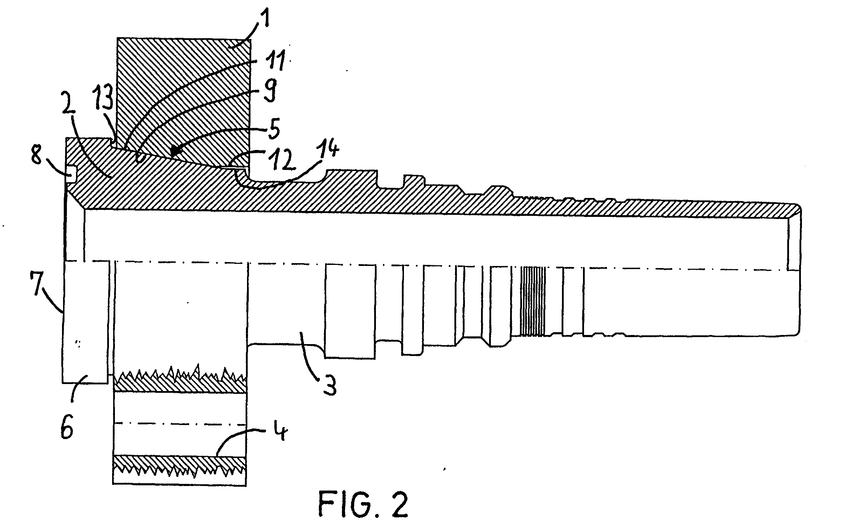

Wie sich aus den Figuren 1 und 2 ergibt, besteht eine erfindungsgemäße Schlaucharmatur(SAE-Kopfarmatur) aus einem Vollflansch 1, der auf einen Anschlußkopf 2 (SAE-Kopf 2) aufgeschoben ist. An den SAE-Kopf 2 schließt sich einstückig ein Rohrstutzen 3 an. Der Vollflansch 1 weist vier äußere symmetrisch angeordnete Schraubenlöcher 4 auf und eine mittige Durchgangsöffnung 5. Mit der Durchgangsöffnung 5 sitzt der Vollflansch 1 auf dem SAE-Kopf 2. Der SAE-Kopf 2 ist im wesentlichen kegelstumpfförmig ausgebildet.

Bei dem in Figur 1 dargestellten Ausführungsbeispiel schließt sich an die größere Kegelstumpfendfläche des SAE-Kopfes 2 ein kreiszylindrischer Ansatz 6 an, dessen Durchmesser größer ist als der Durchmesser der größeren Kegelstumpfendfläche und des damit eine Anzugsbegrenzung 13 für den Vollflansch 1 bildet. Die Anzugsbegrenzung bildet einen Ringbund. In der Stirnfläche 7 des Ansatzes 6 befindet sich eine Ringnut 8, in der ein nicht dargestellter O-Dichtring einsetzbar ist. Der Steigungswinkel des kegelstumpfförmigen Abschnitts 9 des SAE-Kopfes 2 beträgt vorzugsweise 15°. Weiterhin weist der Vollflansch 1 innerhalb der Durchgangsöffnung 5 zwei Abschnitte auf, und zwar einen ersten kegelstumpfförmigen Öffnungsabschnitt 11, der an den Kegelstumpfabschnitt 9 in bezug auf seine Abmessungen angepaßt ist, und einen zweiten kreiszylindrischen Öffnungsabschnitt 12, der den Rohrstutzen 3 umfaßt und an dessen Außendurchmesser mit seinem Innendurchmesser angepaßt ist.

Figur 2 zeigt eine zweite Ausführungsform, welche sich von der in Figur 1 gezeigten Form in der Gestaltung und Aufteilung der Durchgangsöffnung 5 des Vollflansches 1, des kegelstumpfförmigen Abschnitts 9 und des kreiszylindrischen Abschnitts 14 des SAE-Kopfes 2 unterscheidet. Dabei ist der kegelstumpfförmige Abschnitt 9 des SAE-Kopfes 2 sehr viel länger als der kreiszylindrische Abschnitt 14. Um das Aufschieben des Vollflansches 1 zu erleichtern, ist in dieser Ausführungsform der Innendurchmesser des kreiszylindrischen Abschnitts 12 des Vollflansches 1 geringfügig größer gewählt als der Außendurchmesser des kreiszylindrischen Abschnitts 14 des SAE-Kopfes 2.

Wesentlich bei der erfindungsgemäßen Armatur ist, daß die berechnete Kraftübertragung weiterhin überwiegend zwischen Vollflansch 1 und Kegelstumpfumfangsfläche erfolgt und die Auflage auf den Anzugsbegrenzungsbund 13 erfolgt.

## Patentansprüche

1. Schlaucharmatur, die als SAE-Kopfarmatur für Höchstdruckschläuche ausgebildet ist, bestehend aus einem Rohrstutzen (3) mit einendigem Anschlußkopf (2), der als SAE-Kopf ausgebildet ist, wobei der Rohrstutzen (3) sich einstückig an dem Anschlußkopf (2) anschließt, sowie einem auf diesem gelagerten einteiligen Vollflansch (1), wobei der Anschlußkopf (2) kegelstumpfförmig ausgebildet ist und die kleinere Kegelstumpfendfläche den Übergang zum Rohrstutzen (3) bildet und der Vollflansch (1) eine Durchgangsöffnung (5) besitzt, die ein dem kegelstumpfförmigen Abschnitt (9) des Anschlußkopfes (2) entsprechendes kegelstumpfförmiges Negativprofil aufweist,
**dadurch gekennzeichnet,**
**dass** der Anschlußkopf (2) im Bereich der größeren Kegelstumpfendfläche eine Anzugsbegrenzung (13) für den Vollflansch (1) aufweist, und sich die Anzugsbegrenzung (13) unmittelbar an die größere Kegelstumpfendfläche anschließt, wobei die Anzugsbegrenzung (13) derart ausgebildet und angeordnet ist, dass ihre Stirnfläche (7) durch eine Durchmesservergrößerung des Anschlußkopfs (2) vergrößert wird und die Anzugsbegrenzung (13) aus einem Ringbund (6) besteht und wobei in der Stirnfläche (7) eine Ringnut (8) für einen O-Dichtring angeordnet ist.

2. Schlaucharmatur nach Anspruch 1 ,
**dadurch gekennzeichnet,**
**dass** der Steigungswinkel des kegelstumpfförmigen Abschnitts (9) 15 ° beträgt.

3. Schlaucharmatur nach Anspruch 1 oder 2,
**dadurch gekennzeichnet,**
**dass** der Vollflansch (1) innerhalb der Durchgangsöffnung (5) zwei Abschnitte (11, 12) aufweist, wobei der erste Abschnitt (11) als kegelstumpfförmiger Öffnungsabschnitt (11) ausgebildet ist, der an den Kegelstumpfabschnitt (9) in Bezug auf seine Abmessungen angepasst ist, und der zweite Abschnitt (12) als kreiszylindrischer Öffnungsabschnitt (12) ausgebildet ist.

4. Schlaucharmatur nach Anspruch 3,
**dadurch gekennzeichnet,**
**dass** der kreiszylindrische Öffnungsabschnitt (12) der Durchgangsöffnung (5) ungefähr doppelt so lang ist, wie der kegelstumpfförmige Öffnungsabschnitt (11).

5. Schlaucharmatur nach Anspruch 3 oder 4,
**dadurch gekennzeichnet,**
**dass** der kreiszylindrische Öffnungsabschnitt (12) den Rohrstutzen (3) umfasst und an dessen Aussendurchmesser mit seinem Innendurchmesser angepasst ist.

6. Schlaucharmatur nach Anspruch 3,
**dadurch gekennzeichnet,**
**dass** der kegelstumpfförmige Abschnitt (9) des Anschlusskopfes (2) sehr viel länger als der kreiszylindrische Abschnitt (14) des Anschlusskopfes (2) ist.

7. Schlaucharmatur nach Anspruch 6,
**dadurch gekennzeichnet,**
**dass** der Innendurchmesser des kreiszylindrischen Abschnitts (12) des Vollflansches (1) geringfügig größer als der Aussendurchmesser des kreiszylindrischen Abschnitts (14) des Anschlusskopfes (2) ist.

8. Schlaucharmatur nach einem der vorhergehenden Ansprüche,
**dadurch gekennzeichnet,**
**dass** der Vollflansch (1) vier äussere symmetrisch angeordnete Schraubenlöcher (4) aufweist.

## Claims

1. Hose fitting, which is designed as a SAE head fitting for ultrahigh-pressure hoses, consisting of a pipe nipple (3) with a one-end connection head (2) which is designed as an SAE head, the pipe nipple (3) adjoining the connection head (2) in one piece, and of a one-part solid flange (1) mounted on the said connection head, the connection head (2) being of frustoconical design and the smaller cone-frustum end face forming the transition to the pipe nipple (3), and the solid flange (1) possessing a passage orifice (5) which has a frustoconical negative profile corresponding to the frustoconical portion (9) of the connection head (2), **characterized in that** the connection head (2) has, in the region of the larger cone-frustum end face, a tightening limitation (13) for the solid flange (1), and the tightening limitation (13) directly adjoins the larger cone-frustum end face, the tightening limitation (13) being designed and arranged in such a way that its end face (7) is enlarged by means of a diametral enlargement of the connection head (2), and the tightening limitation (13) consisting of an annular collar (6), and an annular groove (8) for an O-type sealing ring being arranged in the end face (7).

2. Hose fitting according to Claim 1, **characterized in that** the pitch angle of the frustoconical portion (9) is 15°.

3. Hose fitting according to Claim 1 or 2, **characterized in that** the solid flange (1) has two portions (11, 12) within the passage orifice (5), the first portion (11) being designed as a frustoconical orifice portion (11) which is adapted to the frustoconical portion (9) in terms of its dimensions, and the second portion (12) being designed as a circular-cylindrical orifice portion (12).

4. Hose fitting according to Claim 3, **characterized in that** the circular-cylindrical orifice portion (12) of the passage orifice (5) is approximately twice as long as the frustoconical orifice portion (11).

5. Hose fitting according to Claim 3 or 4, **characterized in that** the circular-cylindrical orifice portion (12) surrounds the pipe nipple (3) and is adapted with its inside diameter to the outside diameter of the latter.

6. Hose fitting according to Claim 3, **characterized in that** the frustoconical portion (9) of the connection head (2) is very much longer than the circular-cylindrical portion (14) of the connection head (2).

7. Hose fitting according to Claim 6, **characterized in that** the inside diameter of the circular-cylindrical portion (14) of the solid flange (1) is slightly larger than the outside diameter of the circular-cylindrical portion (14) of the connection head (2).

8. Hose fitting according to one of the preceding claims, **characterized in that** the solid flange (1) has four outer symmetrically arranged screw holes (4).

## Revendications

1. Raccord pour tuyau, qui est formé comme un raccord à tête selon la SAE pour tuyaux pour très hautes pressions, comprenant une tubulure (3) avec tête de raccordement (2) à une extrémité, qui est formée comme une tête selon la SAE, la tubulure (3) se raccordant en une seule pièce à la tête de raccordement (2), ainsi qu'une bride pleine (1) d'une seule partie montée sur ladite tête, la tête de raccordement (2) étant de forme tronconique et la plus petite surface d'extrémité du tronc de cône formant le passage à la tubulure (3) et la bride pleine (1) possédant une ouverture de passage (5) qui présente un profil négatif tronconique correspondant au segment tronconique (9) de la tête de raccordement (2), **caractérisé en ce que** la tête de raccordement (2) présente, dans la zone de la plus grande surface d'extrémité du tronc de cône, une limitation de serrage (13) pour la bride pleine (1) et que la limitation de serrage (13) fait suite directement à la plus grande surface d'extrémité du tronc de cône, la limitation de serrage (13) étant formée et disposée de telle sorte que sa surface frontale (7) soit agrandie par une augmentation du diamètre de la tête de raccordement (2), et la limitation de serrage (13) consiste en un collet annulaire (6), et une rainure annulaire (8) pour un joint d'étanchéité torique étant disposée dans la surface frontale (7).

2. Raccord pour tuyau selon la revendication 1, **caractérisé en ce que** l'angle d'inclinaison du segment tronconique (9) est de 15°.

3. Raccord pour tuyau selon la revendication 1 ou 2, **caractérisé en ce que** la bride pleine (1) présente, à l'intérieur de l'ouverture de passage (5), deux segments (11, 12), le premier segment (11) étant formé comme un segment d'ouverture tronconique (11), qui est adapté au segment tronconique (9) en ce qui concerne ses dimensions, et le deuxième segment (12) est formé comme un segment d'ouverture cylindrique circulaire (12).

4. Raccord pour tuyau selon la revendication 3, **caractérisé en ce que** le segment d'ouverture cylindrique circulaire (12) de l'ouverture de passage (5) est environ deux fois plus long que le segment d'ouverture tronconique (11).

5. Raccord pour tuyau selon la revendication 3 ou 4, **caractérisé en ce que** le segment d'ouverture cylindrique circulaire (12) entoure la tubulure (3) et est adapté au diamètre extérieur de celle-ci avec son diamètre intérieur.

6. Raccord pour tuyau selon la revendication 3, **caractérisé en ce que** le segment tronconique (9) de la tête de raccordement (2) est beaucoup plus long que le segment cylindrique circulaire (14) de la tête de raccordement (2).

7. Raccord pour tuyau selon la revendication 6, **caractérisé en ce que** le diamètre intérieur du segment cylindrique circulaire (12) de la bride pleine (1) est légèrement plus grand que le diamètre extérieur du segment cylindrique circulaire (14) de la tête de raccordement (2).

8. Raccord pour tuyau selon l'une quelconque des revendications précédentes, **caractérisé en ce que** la bride pleine (1) présente quatre trous de vis extérieurs (4) disposés de manière symétrique.
